# EUROPEAN PATENT SPECIFICATION

(11) **EP 4 300 870 B1**
(45) Date of publication and mention of the grant of the patent: **23.04.2025**
(21) Application number: 23210444.8
(22) Date of filing: 08.11.2019
(51) Int. Cl.: H04W 16/28, H04W 72/04, H04L 5/00

(54) **INFORMATION PROCESSING METHOD AND TERMINAL DEVICE**
INFORMATIONSVERARBEITUNGSVERFAHREN UND ENDGERÄTEVORRICHTUNG
PROCÉDÉ DE TRAITEMENT D'INFORMATIONS ET DISPOSITIF TERMINAL

(43) Date of publication of application: 03.01.2024
(62) Divisional of application: 19951377.1
(73) Proprietor: GUANGDONG OPPO MOBILE TELECOMMUNICATIONS CORP., LTD., Dongguan, Guangdong 523860 (CN)
(72) Inventor: SHI, Zhihua, Guangdong, 523860 (CN); CHEN, Wenhong, Guangdong, 523860 (CN); FANG, Yun, Guangdong, 523860 (CN); HUANG, Yingpei, Guangdong, 523860 (CN); ZHANG, Zhi, Guangdong, 523860 (CN)
(74) Representative: Taor, Simon Edward William

(56) References cited:
- EP-A1- 3 565 172
- MEDIATEK INC: "Summary of Bandwidth Part Remaining Issues", vol. RAN WG1, no. Chengdu, China; 20181008 - 20181012, 9 October 2018 (2018-10-09), XP051519216, Retrieved from the Internet <URL:http://www.3gpp.org/ftp/tsg%5Fran/WG1%5FRL1/TSGR1%5F94b/Docs/R1%2D1811893%2Ezip> [retrieved on 20181009]

## Description

### TECHNICAL FIELD

Embodiments of the present disclosure generally relate to mobile communication technologies, and more particularly, to an information processing method and a terminal device.

### BACKGROUND

Design goals for New Radio (NR)/5G systems include large-bandwidth communications in high frequency bands, such as frequency bands above 6G hertz (Hz). When the operating frequency becomes higher, the path loss in the transmission process will increase, thus affecting the coverage capability of the high-frequency system. An effective technical solution that can effectively ensure the coverage of a high frequency band NR system is to use a multiple beam technology to improve coverage based on Massive Multiple-Input Multiple-Output (Massive MIMO). The multiple beam technology may also be referred to as a hybrid beam technology.

The current multiple beam technology is mainly used in single-carrier scenarios, and does not involve multi-carrier scenarios. Therefore, the application of multiple beam technology in multi-carrier scenarios has become a problem to be solved. Related technologies can be found in a non-patent document MEDIATEK INC: "Summary of Bandwidth Part Remaining Issues", which is a 3GPP DRAFT (R1-1811893) and a patent document EP 3565172 A1. The non-patent document "Summary of Bandwidth Part Remaining Issues" discloses the scheduling of PDSCH across bandwidth parts, BWPs, and component carriers, CCs, and BWP switching procedure. The patent document EP3565172A1 discloses using the lowest CORESET ID for PDSCH by considering only CORESETS in an active BWP in the case of a single CC.

### SUMMARY

A method and a corresponding terminal device are defined by the appended independent claims 1, 12 respectively. The invention is defined by the appended claims.

The method can realize the application of the multiple beam technology in multi-carrier scenarios.

### BRIEF DESCRIPTION OF THE DRAWINGS

FIG. 1 is a schematic structural diagram of an exemplary single beam system according to an embodiment of the present disclosure.
FIG. 2 is a schematic structural diagram of an exemplary multi-beam system according to an embodiment of the present disclosure.
FIG. 3 is a schematic structural diagram of an exemplary multi-TRP system according to an embodiment of the present disclosure.
FIG. 4 is a schematic flowchart of an exemplary method for determining a TCI state according to an embodiment of the present disclosure.
FIG. 5 is a schematic diagram of an exemplary signaling format of a MAC CE according to an embodiment of the present disclosure.
FIG. 6 is a schematic diagram of an exemplary composition structure of a communication system according to an embodiment of the present disclosure.
FIG. 7 is a schematic diagram of an exemplary processing flow of an information processing method according to an embodiment of the present disclosure.
FIG. 8 is a schematic structural diagram of an exemplary terminal device according to an embodiment of the present disclosure.
FIG. 9 is a schematic structural diagram of an exemplary electronic device p according to an embodiment of the present disclosure.

### DETAILED DESCRIPTION

In order to understand features and technical contents of embodiments of the present disclosure in more detail, implementations of the present disclosure will be described in detail below with reference to the accompanying drawings. The accompanying drawings are for the purpose of illustration only and are not intended to limit embodiments of the present disclosure.

Before describing the information processing method provided by embodiments of the present disclosure in detail, a multi-beam system, quasi-co-location (QCL), multiple transmit-receive point (TRP)/panel/beam transmission will be explained.

### Multi-beam System

The multi-beam system using the multiple beam technology in NR/5G concentrates the transmit power in a narrow beam in the downlink to cover a part of the area in a cell, so as to achieve enhanced coverage of the entire system.

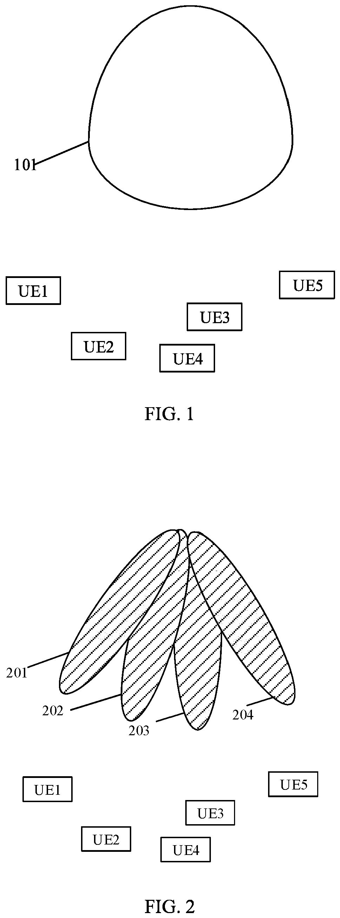

Legacy network deployments (e.g., 3G, 4G/Long Term Evolution (LTE)) use one beam (in legacy systems, there is no need to mention the concept of beams because there is only one beam) to cover an entire cell. In an example, as shown in FIG. 1, the network uses a relatively wide beam, i.e., beam 101, to cover the entire cell, and the network can provide services for the terminal devices in the cell at the same time: User Equipment (UE) 1, UE2, UE3, UE4 and UE5. Therefore, at every moment, the terminal devices within the coverage of the cell have an opportunity to obtain a transmission resource allocated by the system.

In NR, relatively narrow multiple beams are used, and thus the energy can be concentrated, and accordingly, even terminal devices far away from the cell can also achieve good reception performance.

The multi-beam system achieves the effect of covering the entire cell through temporal beam sweeping, that is, different beams are used to cover different areas at different times, each beam covers a relatively small area, and the multiple beams cover the entire cell through temporal sweeping. In an example, as shown in FIG. 2, the multi-beam system uses four different beams at different times: beam 201, beam 202, beam 203 and beam 204, to respectively cover different areas. The beam 201 at time 1 covers the area corresponding to UE1, the beam 202 at time 2 covers the area corresponding to UE, the beam 203 at time 3 covers the area corresponding to UE3 and UE4, and the beam 204 at time 5 covers the area corresponding to UE5. The terminal devices in the cell can communicate with the network device only when a certain beam just covers its corresponding area at a certain time. For example, at time 3, the system uses the beam 3 to cover UE3 and UE4, and UE3 and UE4 can communicate with a communication device.

In the above descriptions, the case where multiple transmission beams are used in the downlink is taken as an example. Similarly, the terminal devices may also use multiple transmission beams for uplink transmission. The principles are similar, and will not be repeated here.

Beam is a term used in everyday discussions. In actual protocols, the word beam is often invisible, and different beams are identified or indicated by the different signals they carry, such as:
- Different Synchronization Signal (SS)/Physical Broadcast Channel (PBCH) blocks are transmitted on different beams; terminal devices may distinguish downlink transmission beams through different SS/PBCH blocks.
- Channel State Information Reference Signal (CSI-RS) signals corresponding to different CSI-RS resources are transmitted on different beams; terminal devices may distinguish downlink transmission beams through CSI-RS signals/CSI-RS resources.

In a multi-beam system, a Physical Downlink Control Channel (PDCCH) and a Physical Downlink Shared Channel (PDSCH) may be transmitted through different downlink transmission beams:
• For systems whose operating frequency band is below 6GHz, terminal devices do not have an analog beam, and use an omnidirectional antenna (or an antenna close to the omnidirectional antenna) to receive signals sent by different downlink transmission beams of a network device.
• For millimeter-wave systems, terminal devices may have an analog beam, and the terminal devices use corresponding downlink receiving beams to receive signals sent by corresponding downlink transmission beams. In this case, corresponding beam indication information is required to assist the terminal devices in determining related information of the transmission beams of the network device, or related information of the receiving beams corresponding to the terminal devices.

In protocols, the beam indication information does not directly indicate a beam itself, but indicates the beam through QCL assumption between signals. On the terminal device side, the determination to receive corresponding channel/signal is also based on the QCL assumption.

### QCL

When a terminal device receives a signal, in order to improve the receiving performance, the receiving algorithm may be improved by using the characteristics of a transmission environment corresponding to data transmission. For example, channel estimator design and parameters may be optimized using statistical properties of the channel.

The description regarding QCL is as follows. Large-scale parameters of a channel on one antenna port may be derived from another antenna port, then these two antenna ports are considered to have a QCL relationship. The large-scale parameters include: Doppler delay, average delay, spatial reception parameters, etc. That is to say, when two SSBs have a QCL relationship, it can be considered that the large-scale parameters (such as Doppler delay, average delay, spatial reception parameters, etc.) of the two SSBs may be inferred from each other, or may be considered as akin.

In the NR system, the statistical characteristics of a channel corresponding to data transmission are represented by QCL state information (QCL-Info).

If downlink transmission comes from different TRPs/panels/beams, the characteristics of the transmission environment corresponding to the data transmission may also change. Therefore, in the NR system, when the network device transmits a downlink control channel or data channel, the network device indicates corresponding QCL state information to a terminal by a Transmission Configuration Indicator (TCI) state.

The TCI state may contain the following configurations:
• TCI state ID used to identify a TCI state;
• QCL information 1;
• QCL information 2 (optional).

One piece of QCL information may include the following information:
• QCL type configuration, which may be one of QCL type A (typeA), QCL type B (typeB), QCL type C (typeC) or QCL type D (typeD);
• QCL reference signal configuration, including the identity document (ID) of the serving cell where the reference signal is, the BWP ID of a bandwidth part (BWP), and the reference signal identifier; where the reference signal identifier may be a CSI-RS resource ID or Synchronization Signal Block (SSB) index. SSB may also be called SS/PBCH block.

If both QCL information 1 and QCL information 2 are configured, the QCL type of at least one QCL information must be one of QCL typeA, QCL typeB, and QCL typeC, and the QCL type of the other QCL information (if configured) must be QCL typeD.

The definitions of different QCL type configurations are as follows:
• QCL-TypeA: {Doppler shift, Doppler spread, average delay, delay spread};
• QCL-TypeB: {Doppler shift, Doppler spread};
• QCL-TypeC: {Doppler shift, average delay};
• QCL-TypeD: {Spatial Rx parameter}.

In the NR system, the network device may indicate a corresponding TCI state for a downlink signal or downlink channel.

If the network device configures a QCL reference signal for a target downlink signal as a reference SSB or reference CSI-RS resource through a TCI state, and the QCL type configuration is QCL typeA, QCL typeB or QCL typeC, the terminal may assume that the large-scale parameters of the target downlink signal and the reference SSB or the reference CSI-RS resource are the same. The large-scale parameters are determined by the QCL type configuration.

If the network device configures a QCL reference signal for a target downlink signal as a reference SSB or reference CSI-RS resource through a TCI state, and the QCL type configuration is QCL typeD, the terminal device may use the same receiving beam (i.e., spatial Rx parameter) as the reference SSB or reference CSI-RS resource to receive the target downlink signal.

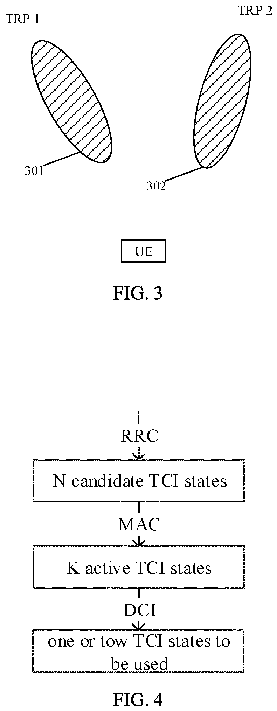

Generally, the target downlink signal (or the target downlink channel) and its reference SSB resource or reference CSI-RS resource are sent by the same TRP or the same panel or the same beam on the network side. If the TRPs/panels/beams transmitting two downlink signals are different, different TCI states are usually configured. In an example, a network structure including two TRPs may be shown in FIG. 3, and the UE communicates with TRP1 and TRP2 through beams 301 and 302, respectively.

For a downlink control channel, a TCI state of a corresponding Control Resource Set (CORESET) may be indicated by Radio Resource Control (RRC) signaling, or RRC signaling + Media Access Control (MAC) signaling.

For a downlink data channel, an available TCI state set is indicated by RRC signaling, and some of the TCI states are activated by MAC layer signaling, and one or two TCI states among the active TCI states are indicated in a TCI state indication field in Downlink Control Information (DCI) for PDSCH scheduled by the DCI. In an example, as shown in FIG. 4, N candidate TCI states are indicated through RRC signaling, the N candidate TCI states constitute an available TCI state set, and K candidate TCI states are activated through MAC layer signaling to obtain K active TCI states, and one or two TCI states from the active TCI states are indicated through DCI as TCI states used for PDSCH scheduled by DCI.

The case of two TCI states is mainly for multiple TRP-like scenarios discussed later.

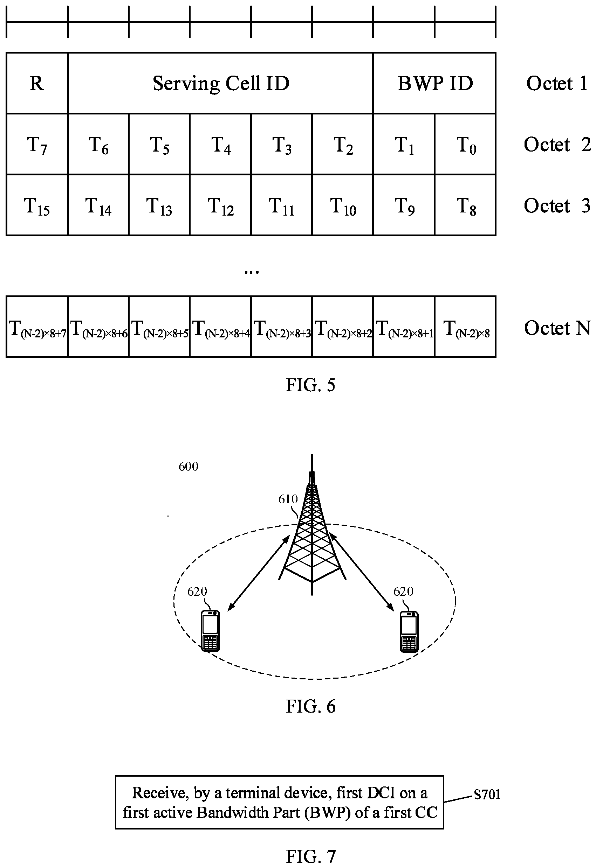

The format of the MAC Control Element (MAC CE) signaling used to activate/deactivate the TCI states in the PDSCH is shown in FIG. 5. The format includes:
BWP indication field: BWP identity, 2 bits in length and located in octet 1;
serving cell indication field: serving cell identity, 5 bits in length and located in octet 1;
reserved field: reserved bit, the value being set to 0 and located in octet 1;
TCI state indication field identifier: indicating whether the TCI state with a TCI state identifier Ti is activated. If the TCI state corresponding to the TCI state identifier has been configured, Ti indicates that the TCI state is activated or deactivated; if not configured, the field Ti is ignored. For example, if Ti is set to 1, the TCI state corresponding to Ti is activated. The maximum number of active TCI states is 8. In one example, as shown in FIG. 5, Ti includes: bits T₀, T₁ to T_{(N-2) x 8+7} in octet 2 to octet N.

### Multi-TRP/panel/beam transmission

In NR/5G, the schemes of multiple TRPs or multiple panels (that is, antenna panels) or multiple beams simultaneously transmit downlink data to a terminal device support the following two schemes:

### Scheme 1: Based on a single PDCCH (single-PDCCH)

The terminal device only detects one PDCCH, and one DCI obtained by detecting the PDCCH indicates related indication information of data transmitted simultaneously on multiple TRPs/panels/beams.

### Scheme 2: Based on multiple PDCCHs (multiple-PDCCH)

The terminal device detects different PDCCHs from different TRPs/panels/beams, and the DCI detected on each PDCCH indicates related indication information of a corresponding data transmission.

For Scheme 1, the terminal device only needs to detect one PDCCH, and thus the control channel detection complexity may be lower than that of Scheme 2. Scheme 1 requires quick exchange of information between different panels/TRPs/beams.

For Scheme 2, the terminal device needs to detect multiple PDCCHs on the same carrier at the same time, the complexity may be increased, but the flexibility and robustness will be improved.

The possible application scenarios of Scheme 2 include at least:
S1-1: Multiple TRPs belong to the same cell, and the connection (backhaul) between TRPs is ideal (that is, information exchange maybe performed quickly and dynamic information exchange is performed);
S1-2: Multiple TRPs belong to the same cell, and the connection between TRPs is not ideal (that is, TRPs cannot exchange information quickly, and only relatively slow data exchange is allowed);
S1-3: Multiple TRPs belong to different cells, and the connection between TRPs is ideal;
S1-4: Multiple TRPs belong to different cells, and the connection between TRPs is not ideal;
S2-1: Multiple beams belong to the same cell, and the connection between beams is ideal;
S2-2: Multiple beams belong to the same cell, and the connection between beams is not ideal (that is, TRPs cannot exchange information quickly, and only relatively slow data exchange is allowed);
S2-3: Multiple beams belong to different cells, and the connection between beams is ideal;
S2-4: Multiple beams belong to different cells, and the connection between beams is not ideal.

Scheme 1 is generally considered to be applicable only to ideally connected backhaul scenarios (i.e., S1-1, S1-3, S2-1, and S2-3).

In order to meet the requirements of high-speed services, the system may support carrier aggregation (CA) technology. The CA technology enables the system to support a larger bandwidth by jointly scheduling and using resources on multiple Component Carriers (CCs), thereby enabling a higher system peak rate.

The above beam indication scheme (including the QCL assumption when receiving at the UE side) mainly considers the multi-TRP/panel/beam single-carrier situation, and does not propose a solution for the multi-TRP/panel/beam multi-carrier scenario.

Based on the above problem, an embodiment of the present disclosure provides an information processing method. The information processing method of the embodiment of the present disclosure may be applied to various communication systems, such as LTE system, LTE Frequency Division Duplex (FDD) system, LTE Time Division Duplex (TDD), Universal Mobile Telecommunication System (UMTS), 5G system or future communication systems, etc.

Exemplarily, a communication system 600 to which embodiments of the present disclosure is applied is shown in FIG. 6. The communication system 500 may include a network device 610. The network device 610 may be a device that communicates with a terminal device 620 (or referred to as a communication terminal, a terminal). The network device 610 may provide communication coverage for a particular geographic area, and may communicate with terminal devices within the coverage area. Optionally, the network device 610 may be an evolved base station (Evolutional Node B, eNB or eNodeB) in an LTE system, a base station (gNB) in an NR/5G system, or a wireless controller in a Cloud Radio Access Network (CRAN).

The communication system 600 may further include: a wireless controller in a Cloud Radio Access Network (CRAN), or a mobile switching center, a relay station, an access point, an in-vehicle device, a wearable device, a hub, a switch, a network bridge, a router, a network-side device in 5G networks, or a network device in a future evolved Public Land Mobile Network (PLMN), etc.

The communication system 600 also includes at least one terminal device 620 within the coverage of at least one network device 610. The "terminal device" herein may be connected in the following manners (including but not limited to):

The terminal device may be connected via wired lines, such as via Public Switched Telephone Networks (PSTN), Digital Subscriber Line (DSL), digital cables, or direct cable connections; and/or the terminal may be connected via another data connection/network; and/or the terminal device may be connected via a wireless interface, such as cellular networks, wireless local area network (WLAN), digital TV networks such as DVB-H networks, satellite networks, AM-FM broadcast transmitter; and/or the terminal device is connected via a device of another terminal device which is configured to receive/send communication signals; and/or the terminal device is connected via an Internet of Things (IoT) device. A terminal device set as communicating through a wireless interface may be referred to as a "wireless communication terminal", a "wireless terminal" or a "mobile terminal". Examples of the mobile terminal include but are not limited to: satellite or cellular phone; Personal Communications System (PCS) terminal that can integrate a cellular radio phone with data processing, fax, and data communication capabilities; a PDA which can include a radio phone, a pager, an Internet/intranet access, a Web browser, a memo pad, a calendar, and/or Global Positioning System (GPS) receiver; and conventional laptop and/or palmtop receivers or other electronic device including a radio telephone transceiver. The terminal device can refer to access terminal, UE, user unit, user station, mobile station, mobile device, remote station, remote terminal, mobile equipment, user terminal, terminal, wireless communication equipment, user agent or user device. The access terminal can be a cellular phone, a cordless phone, a Session Initiation Protocol (SIP) phone, a Wireless Local Loop (WLL) station, a Personal Digital Assistant (PDA), a handheld device with wireless communication functions, a computing device or other processing device connected to a wireless modem, an in-vehicle device, a wearable device, a terminal device in 5G networks, or a terminal device in the future evolved PLMN, etc.

According to some embodiments, the 5G system or 5G network may also be referred to as an NR system or an NR network.

FIG. 6 exemplarily shows one network device and two terminal devices, and according to some other embodiments, the communication system 600 may include multiple terminal devices and multiple network devices, and the coverage of each network device may include other numbers of terminal devices, and embodiments of the present disclosure do not impose specific limitations on this.

According to some embodiments, the communication system 600 may further include other network entities such as a network controller or a mobility management entity, and embodiments of the present disclosure do not impose specific limitations on this.

According to some embodiments, the information processing method provided by embodiments of the present disclosure is applicable to transmission between a terminal device and a network device.

According to some other embodiments, the information processing method provided by embodiments of the present disclosure is applicable to transmission between a terminal device and another terminal device.

It should be noted that the information processing method, terminal device, and storage medium provided by embodiments of the present disclosure may be applicable to the situation of scheduling CSI-RS. The threshold value corresponding to the CSI-RS may be different from the threshold value corresponding to the PDSCH. The threshold value corresponding to the PDSCH includes the following first threshold and/or second threshold.

An exemplary processing flow of the information processing method provided by an embodiment of the present disclosure is as shown in FIG. 7. The method includes the following step:

In S701, a terminal device receives a first DCI on a first active BWP of a first CC.

In an embodiment of the present disclosure, the first DCI is transmitted on a resource indicated by a first CORESET corresponding to the first active BWP, and a first PDSCH scheduled by the first DCI is carried on a second active BWP of a second CC.

The scenarios supported by the terminal device include one of the following: a multiple PDCCH scenario and a single PDCCH scenario.

In an embodiment of the present disclosure, the multiple PDCCH scenario may also be referred to as a multi-DCI scenario, and the DCIs carried on different PDCCHs indicate related indication information of data transmission of corresponding TRPs/panels/beams. A single PDCCH scenario may also be referred to as a single DCI scenario, where one downlink DCI and/or one uplink DCI carried on one PDCCH indicates related indication information of data transmitted simultaneously on multiple TRPs/panels/beams.

Taking the situation where the terminal device supports the multi-PDCCH scenario as an example, the first CORESET belongs to a first CORESET pool.

When the terminal device supports multiple PDCCHs, the terminal device has different TCIs corresponding to different TRPs/panels/beams through the configuration of the CORESET pool. DCIs carried on different PDCCHs indicate related indication information of data transmission corresponding to multiple TRPs/panels/beams. Thus, different PDCCHs indicate data transmission of different TRPs/panels/beams.

According to some embodiments, when the terminal device supports multiple PDCCHs, in the case of receiving the first DCI, other DCIs are not received. When the terminal device supports multiple PDCCHs, in the case of receiving the first DCI, it receives a second DCI.

According to some embodiments, when a CORESET corresponding to the first active BWP is not configured with a pool index, all the CORESETs corresponding to the first active BWP belong to the first CORESET pool. Under such condition, it is considered that all CORESETs corresponding to the first active BWP belong to the same CORESET pool.

According to some embodiments, at least one of the CORESETs corresponding to the first active BWP is configured with a corresponding pool index. All CORESETs corresponding to the first active BWP may be configured with pool indexes, or may be partially configured with pool indexes.

Taking the situation where a part of CORESETs corresponding to the first active BWP are configured with corresponding pool indexes as an example, a pool index corresponding to a CORESET for which the pool index is configured is configured in a RRC configuration parameter; or a pool index corresponding to a CORESET for which the pool index is not configured is a preset pool index. According to some embodiments, the value of the preset pool index is different from the value of the configured pool index.

According to some embodiments, the first CORESET pool includes at least one CORESET. In an example, the first CORESET pool includes one CORESET. In another example, the first CORESET pool includes multiple CORESETs.

According to some embodiments, the CORESETs in the first CORESET pool correspond to the same pool index.

In an embodiment of the present disclosure, the first active BWP corresponds to one or more CORESET pools. According to some embodiments, when the first active BWP corresponds to one CORESET pool, the corresponding CORESET pool is the first CORESET pool. According to some other embodiments, when the first active BWP corresponds to multiple CORESET pools, the first active BWP corresponds to at least two CORESET pools including the first CORESET pool.

When the first active BWP corresponds to multiple CORESET pools, the pool indexes corresponding to different CORESET pools are different. According to some embodiments, the value of a pool index includes: 0 or 1,
When a part of CORESETs corresponding to the first active BWP are configured with a pool index, the CORESETs not configured with a pool index among the CORESETs corresponding to the first active BWP belong to one CORESET pool.

In an embodiment of the present disclosure, the CORESETs corresponding to the first active BWP include: CORESET 1, CORESET 2, and CORESET 3. The pool index corresponding to CORESET 3 and CORESET 2 is configured 1, and CORESET 1 is not configured with a pool index, and the pool index corresponding to CORESET 1 is the default pool index 0. CORESET 1 may be considered to belong to one CORESET pool (e.g., CORESET pool 1), and CORESET 2 and 3 may be considered to belong to another CORESET pool (e.g., CORESET pool 2). The first DCI is transmitted on a resource indicated by CORESET1.

According to some embodiments, the pool index corresponding to the first CORESET pool is an identifier of the first CORESET pool. Here, CORESETs belong to different CORESET pools by their pool indexes.

When the first active BWP corresponds to multiple CORESET pools, different CORESET pools may correspond to different Hybrid Automatic Repeat request (HARQ) response codebooks (HARQ-ACK codebooks). According to some embodiments, different pool indexes correspond to different HARQ-ACK codebooks.

According to some embodiments, the terminal device receives a second DCI that schedules a second PDSCH, and the second DCI is transmitted on a resource indicated by a CORESET in the second CORESET pool.

According to some embodiments, the first DCI and the second DCI do not overlap in time. According to some other embodiments, the first DCI and the second DCI overlap in time. The overlap between the first DCI and the second DCI in time includes: complete overlap, partial overlap, and inclusion.

Taking a situation where the DCI scenario supported by the terminal device is a multi-PDCCH scenario as an example, in an embodiment of the present disclosure, after S701, the method further includes: the terminal device determines a first target transmission configuration indication (TCI) state, wherein the first target TCI state is used for receiving the first PDSCH.

The first target TCI state is directly used as the TCI state when the first PDSCH is received, or used to determine the QCL assumption when the first PDSCH is received.

The rule for determining the first target TCI state includes at least one of the following:
Rule A1: when the first CC and the second CC are the same CC or the length of a carrier indicator field of the first DCI is 0 bit, and the first DCI does not carry a TCI state indication field or a scheduling time interval of the first DCI is smaller than, or smaller than or equal to a first threshold, the first target TCI state includes: a TCI state with the lowest identity among active TCI states corresponding to the first pool index on the second active BWP.
Rule A2: when the first CC and the second CC are the same CC or the length of the carrier indicator field of the first DCI is 0 bit, and the first DCI does not carry the TCI state indication field or the scheduling time interval of the first DCI is smaller than or equal to the first threshold, the first target TCI state includes: a TCI state corresponding to the second CORESET.
Rule A3: when the first CC and the second CC are different CCs or the length of the carrier indicator field of the first DCI is a non-zero bit, the first CORESET is configured with an information element to indicate that the first DCI contains the TCI state indication field. Under such condition, the first target TCI state includes: a TCI state indicated by the TCI state indication field carried by the first DCI.
Rule A4: When the first CC and the second CC are different CCs or when the length of the carrier indicator field of the first DCI is a non-zero bit, and the first DCI does not carry the TCI state indication field or the scheduling time interval of the first DCI is smaller than or equal to the first threshold, the first target TCI state includes: a TCI state with the lowest identity among active TCI states corresponding to a downlink data channel on the second active BWP.
Rule A5: when the first CC and the second CC are different CCs or when the length of the carrier indicator field of the first DCI is a non-zero bit, and the first DCI does not carry the TCI state indication field or the scheduling time interval of the first DCI is smaller than or equal to the first threshold, the first target TCI state includes: a first TCI state on the second active BWP.
Rule A6: when the first CC and the second CC are different CCs or when the length of the carrier indicator field of the first DCI is a non-zero bit, and the first DCI does not carry the TCI state indication field or the scheduling time interval of the first DCI is smaller than or equal to the first threshold, the first target TCI state includes: a TCI state with the lowest identity among active TCI states corresponding to the first pool index on the second active BWP.

Taking the situation where the rule for determining the first target TCI state includes rule A1 as an example, the terminal receives the first PDSCH according to the TCI state with the lowest identity among the active TCI states corresponding to the first pool index on the second active BWP.

According to some embodiments, the first pool index includes: a pool index corresponding to the first CORESET.

According to some embodiments, the pool index on the second active BWP may be configured through RRC or associated with an active TCI state corresponding to the MAC CE signaling.

Taking the situation where the rule for determining the first target TCI state includes rule A2 as an example, the terminal device determines to receive the first PDSCH according to the TCI state corresponding to the second CORESET.

According to some embodiments, the second CORESET includes: a CORESET with a lowest identity among CORESETs corresponding to a second pool index in a latest downlink time slot on the first active BWP detected by the terminal device.

According to some embodiments, the second pool index includes: a pool index corresponding to the first CORESET.

Taking a situation where the rule for determining the first target TCI state includes rule A3 as an example, the terminal device does not want the first DCI not to carry the TCI state indication field. Therefore, in the first DCI sent by the network device to the terminal device, the TCI state indication field needs to be configured.

According to some embodiments, the information element in the first CORESET indicating whether the first DCI includes a TCI state indication field is tci-PresentInDCI. When the information element tci-PresentInDCI is set as enabled, it indicates that the first DCI includes the TCI state indication field.

According to some embodiments, the first DCI belongs to DCI format 1_1, that is, the terminal device does not want that the TCI state indication field is not carried in the first DCI format 1_1.

According to some embodiments, DCI format 1_0 is not used for this multi-PDCCH scenario.

In an embodiment of the present disclosure, when the rule for determining the first target TCI state includes rule A3, the scheduling time interval of the first DCI is equal to, or greater than or equal to the first threshold, that is, the terminal device does not want the scheduling time interval of the first DCI to be smaller than, or smaller than or equal to the first threshold.

Taking the situation where the rule for determining the first target TCI includes rule A4 as an example, the terminal device receives the first PDSCH according to the TCI state with the lowest identity among the active TCI states corresponding to a downlink data channel (e.g., PDSCH) on the second active BWP.

According to some embodiments, the terminal device adopts joint HARQ-ACK feedback. According to some other embodiments, the terminal device adopts a separate HARQ-ACK feedback.

When the terminal device uses the joint Hybrid Automatic Repeat reQuest acknowledgment (HARQ-ACK) feedback, the first DCI and the second DCI on the first active BWP do not overlap.

Taking the situation where the rule for determining the first target TCI state includes rule A5 as an example, the terminal device receives the first PDSCH according to the first TCI state on the second active BWP.

According to some embodiments, the first TCI state is configured through RRC signaling or MAC CE signaling.

Taking the situation where the rule for determining the first target TCI state includes rule A6 as an example, the terminal receives the first PDSCH according to the TCI state with the lowest identity among the active TCI states corresponding to the first pool index on the second active BWP.

According to some embodiments, the first pool index includes: a pool index corresponding to the first CORESET.

According to some embodiments, the pool index on the second active BWP may be configured through RRC or associated with the active TCI state corresponding to the MAC CE signaling.

In an embodiment of the present disclosure, the manner of determining the first threshold includes one of the following: network device configuration, pre-provisioning, and UE capability reporting.

According to some embodiments, when the first threshold is reported through the UE capability, the first threshold is reported through a parameter timeDurationForQCL in the UE capability.

According to some embodiments, when the first threshold is reported through the UE capability, relevant capabilities are independently reported for different frequency bands or frequency band combinations.

Taking the situation where the scenario supported by the terminal device ss a single PDCCH scenario as an example, the second active BWP is configured with one or more TCI state groups corresponding to a codepoint of the TCI state indication field of the DCI in the first active BWP.

Through the configuration of the codepoint, one codepoint may correspond to multiple TCI states, and the terminal device may receive data on different TRPs/panels/beams through the same TCI, thus supporting multiple TRP scenarios.

According to some embodiments, at least one TCI state group in the one or more TCI state groups includes at least two TCI states. In an example, the codepoint corresponds to one TCI state group, and the TCI state group includes two TCI states. In another example, the codepoint corresponds to two TCI state groups, one TCI state group includes one TCI state, and the other state group includes two TCI states.

According to some embodiments, the codepoint corresponds to the one or more TCI state groups. In one example, one codepoint corresponds to one TCI state group.

According to some embodiments, the correspondence between the one or more TCI state groups and codepoints is configured through MAC CE.

Taking the situation where the scenario supported by the terminal device is a single PDCCH scenario as an example, in an embodiment of the present disclosure, after S701, the method further includes: the terminal device determining a second target TCI state, wherein the second target TCI state is used to receive the first PDSCH.

The second target TCI state is directly used as the TCI state when the first PDSCH is received, or used to determine the QCL assumption when the first PDSCH is received.

The rules for determining the second target TCI include at least one of the following:
Rule B1: when the first CC and the second CC are the same CC or the length of the carrier indicator field of the first DCI is 0 bit, and the first DCI does not carry the TCI state indication field or the scheduling time interval of the first DCI is smaller than or equal to a second threshold, the second target TCI state includes: a TCI state corresponding to a second CORESET.
Rule B2: when the first CC and the second CC are the same CC or the length of the carrier indicator field of the first DCI is 0 bit, and the first DCI does not carry the TCI state indication field or the scheduling time interval of the first DCI is smaller than or equal to the second threshold, the second target TCI state includes: one or more TCIs corresponding to the smallest codepoint or the largest codepoint in a field for supporting TCI in the DCI on the first active BWP.
Rule B3: when the first CC and the second CC are different CCs or the length of the carrier indicator field of the first DCI is a non-zero bit, the first CORESET is configured with an information element indicating that the first DCI contains the TCI state indication field.
Rule B4: when the first CC and the second CC are different CCs or the length of the carrier indicator field of the first DCI is a non-zero bit, and the first DCI does not carry the TCI state indication field or the scheduling time interval of the first DCI is smaller than, or smaller than or equal to the second threshold, the second target TCI state includes: a TCI state with the lowest identity among the active TCI states corresponding to a downlink data channel in the second active BWP.
Rule B5: when the first CC and the second CC are different CCs or the length of the carrier indicator field of the first DCI is a non-zero bit, and the first DCI does not carry the TCI state indication field or the scheduling time interval of the first DCI is smaller than or equal to the second threshold, the second target TCI state includes: a first TCI state on the second active BWP.
Rule B6: when the first CC and the second CC are the same CC or the length of the carrier indicator field of the first DCI is 0 bit, and the first DCI does not carry the TCI state indication field or the scheduling time interval of the first DCI is smaller than or equal to the second threshold, the second target TCI state includes: one or more TCIs corresponding to the smallest codepoint or the largest codepoint in a field for supporting TCI in the DCI on the first active BWP.

Taking the situation where the rule for determining the second target TCI state is B1 as an example, the terminal device receives the first PDSCH according to the TCI state corresponding to the second CORESET.

According to some embodiments, the second CORESET includes: a CORESET with a lowest identity among CORESETs corresponding to a second pool index in a latest downlink time slot on the first active BWP detected by the terminal device.

Taking the situation where the rule for determining the second target TCI state is B2 as an example, the terminal device receives the first PDSCH according to one or more TCI states corresponding to the minimum codepoint value or the maximum codepoint value in a field supporting TCI in the DCI on the first active BWP.

Taking the situation where the rule for determining the second target TCI state is B3 as an example, the terminal device does not want the first DCI not to carry the TCI state indication field. Therefore, in the first DCI sent by the network device to the terminal device, the TCI state indication field needs to be configured.

According to some embodiments, the information element in the first CORESET indicating whether the first DCI includes a TCI state indication field is tci-PresentInDCI. When the information element tci-PresentInDCI is set as enabled, it indicates that the first DCI includes the TCI state indication field.

According to some embodiments, the first DCI belongs to DCI format 1_1, that is, the terminal device does not want the first DCI format 1_1 not to carry the TCI state indication field.

According to some embodiments, DCI format 1_0 is not used for this multi-PDCCH scenario.

In an embodiment of the present disclosure, when the rule for determining the second target TCI state includes rule A3, the scheduling time interval of the first DCI is equal to or greater than the second threshold, that is, the terminal device does not want the scheduling time interval of the first DCI to be smaller than, or smaller than or equal to the second threshold.

Taking the situation where rule for determining the second target TCI state is B4 as an example, the terminal device receives the first PDSCH according to the TCI state with the lowest identity among the active TCI states corresponding to a downlink data channels (e.g., PDSCH) on second active BWP.

Taking the situation where the rule for determining the second target TCI state is B5 as an example, the terminal device receives the first PDSCH according to the first TCI state on the second active BWP.

According to some embodiments, the first TCI state is configured through RRC signaling or MAC CE signaling.

Taking the situation where the rule for determining the second target TCI state is B6 as an example, the terminal device receives the first PDSCH according to the first TCI state group activated on the second active BWP.

According to some embodiments, the first TCI state group includes: the first or the last TCI state group where the TCI state with the lowest identity among the active TCI states on the second active BWP is located.

According to some embodiments, the first TCI state group includes: a TCI state group corresponding to the minimum codepoint or the maximum codepoint.

In an embodiment of the present disclosure, the manner for determining the second threshold includes one of the following: network device configuration, pre-provisioning, and UE capability reporting.

According to some embodiments, when the second threshold is reported through the UE capability, the second threshold is reported by a parameter timeDurationForQCL in the UE capability.

According to some other embodiments, when the second threshold is reported by the UE capability, relevant capabilities are independently reported for different frequency bands or frequency band combinations.

In an embodiment of the present disclosure, the terminal device feeds back HARQ information through a HARQ response codebook corresponding to the first PDSCH according to a detection situation of the first PDSCH.

The information processing method provided by the embodiments of the present disclosure provides a solution for UE to receive PDSCH for downlink transmission of multiple TRPs/panels/beams. Further, for the case that the scheduling interval is smaller than the threshold, or that the DCI does not carry the TCI state indication field, a solution for the UE to receive the PDSCH is provided.

Hereinafter, the information processing method provided by embodiments of the present disclosure will be illustrated by using different examples.

### Example 1. Multiple PDCCH scenario

The terminal device receives the first DCI on the first active BWP on the first CC. The first DCI is transmitted on a resource indicated by the first CORESET in the first CORESET pool. The first PDSCH scheduled by the first DCI is received on the second active BWP of the second CC.

First, second CC operates in a frequency band higher than 6 GHz, or the second CC operates in a millimeter wave frequency band.

Second, when no pool index is configured for all CORESETs on the first active BWP, all CORESETs belong to one CORESET pool, that is, the first CORESET pool.

According to some embodiments, when all CORESETs on the first active BWP are not configured with a pool index, the pool indexes of all CORESETs are a default pool index, and the default pool index is a fixed value (e.g., 0 or 1).

Third, at least one CORESET on the first active BWP is configured with a corresponding pool index.

According to some embodiments, the pool index is configured in the RRC configuration parameter of the CORESET (for example, the RRC parameter ControlResourceSet). Pool indexes configured for different CORESETs may be the same or different. In an example, CORESETs configured with the same index may be called a CORESET pool, for example, CORESETs with a pool index value of 0 belong to a CORESET pool, and CORESETs with a pool index value of 1 belong to another CORESET pool.

According to some embodiments, the value of a pool index is 0 or 1.

Fourth, the first CORESET pool includes one or more CORESETs, and the CORESETs in the first CORESET pool all correspond to the same pool index.

Fifth, for the first active BWP, the network device configures the terminal device to include multiple CORESET pools including the first CORESET pool, so that multiple TRP/panel/beam scenarios can be supported. Different pool indexes are used to distinguish different CORESET pools. CORESET pool, which can reduce the required number of bits in an indication field in DCI.

Multiple CORESET pools include at least one of the following characteristics:
1) Different CORESET pools correspond to the same BWP.
2) CORESETs in different CORESET pools are associated with different pool indexes, and all CORESETs in the same CORESET pool are associated with the same pool index.
3) All CORESETs with no pool index configured belong to a CORESET pool. Optionally, if there is a CORESET with no pool index configured among the CORESETs on the first active BWP, the pool index of the CORESET is the default pool index, and the default pool index is a fixed value (e.g., 0 or 1).
4) The CORESETs in different CORESET pools are configured in the same PDCCH-config signaling. Optionally, the number of CORESETs is smaller than or equal to 5.
5) The terminal device can report whether the terminal device can support multiple CORESET pools through UE capability.

According to some embodiments, the UE capability is independently reported by frequency bands, for example, some frequency bands or frequency band combinations support multiple CORESET pools, and some frequency bands or frequency band combinations do not support multiple CORESET pools.

Sixth, each CORESET in the first CORESET pool is associated with the same pool index, so that CORESETs belonging to different CORESET pools are distinguished by the pool indexes, and the signaling is relatively simple.

According to some embodiments, the pool index corresponding to a CORESET pool is the identifier of the CORESET pool, so that the identifier of the CORESET pool is introduced, and the signaling is further simplified.

According to some embodiments, the identifier of the CORESET pool is configured by RRC signaling or MAC CE signaling.

Seventh, different CORESET pools may correspond to different HARQ-ACK codebooks, so that HARQ-ACK corresponding to the scheduling data of different CORESET pools can be independently transmitted, effectively supporting non-ideal backhaul scenarios.

According to some embodiments, the pool index corresponds to a HARQ-ACK codebook, that is, different pool indexes correspond to different HARQ-ACK codebooks. Independent HARQ-ACK codebooks are identified by the pool indexes.

Eighth, the terminal device detects the second DCI that schedules the second PDSCH. The second DCI is transmitted on a resource indicated by a CORESET in the second CORESET pool, thereby supporting simultaneous transmission of multiple downlink data channels and increasing the data rate.

According to some embodiments, the second DCI and the first DCI schedule respective PDSCHs.

According to some embodiments, the first DCI and the second DCI overlap in time.

In this example, based on whether the first CC and the second CC are the same CC, the manner of determining the TCI state for receiving the first PDSCH is different:
When the first CC and the second CC are the same CC (or the length of the carrier indicator field in the first DCI is 0 bit), and the first DCI does not carry the TCI state indication field or the scheduling time interval of the first DCI is smaller than, or smaller than or equal to the first threshold, the terminal device, when receiving the first PDSCH, determines the TCI state corresponding to receipt of the first PDSCH according to the TCI state with the lowest identity among the active TCI states corresponding to the first pool index on the second active BWP, or determines QCL assumption when the first PDSCH is received, so as to distinguish different TRPs for the second CC, increase flexibility, and improve system performance.

According to some embodiments, the first pool index is a pool index corresponding to the first CORESET carrying the first DCI.

According to some embodiments, the pool index on the second active BWP may be configured through RRC or associated with the corresponding active TCI state through MAC CE signaling.

When the first CC and the second CC are the same CC (or the length of the carrier indicator field in the first DCI is 0 bit), if the first DCI does not carry the TCI state indication field or the scheduling time interval of the first DCI is smaller than, or smaller than or equal to the first threshold, the terminal, when receiving the first PDSCH, determines the TCI state corresponding to receipt of the first PDSCH according to the TCI state corresponding to the second CORESET, or determines the QCL assumption when the first PDSCH is received.

According to some embodiments, the second CORESET is a CORESET with the lowest identity among the CORESETs corresponding to the second pool index in a latest downlink time slot on the first active BWP detected by the terminal device, and the second pool index is the pool index corresponding to the first CORESET.

When the first CC and the second CC are two different CCs (or the carrier indicator field in the first DCI is 3 bits):
First, the first CORESET for transmitting the first DCI is configured with signaling to indicate that the corresponding first DCI contains the TCI state indication field. That is, the terminal device does not want the first DCI not to carry the TCI state indication field, thereby restricting the network configure situation, reducing the number of possible situations, and reducing the complexity of UE and network implementations.

According to some embodiments, the parameter tci-PresentInDCI in the first CORESET for indicating whether the DCI contains a field for indicating PDSCH beam information is set to: enabled, so as to indicate that the DCI includes a TCI state indication field indicating the PDSCH beam information.

According to some embodiments, the first DCI belongs to DCI format 1_1. Under such condition, the terminal device does not expect that the first DCI format 1_1 does not carry the TCI state indication field, or the DCI format 1_0 is not suitable for such a multi-PDCCH scenario.

According to some embodiments, the TCI indication field (Transmission Configuration Indication) in the first DCI is used to indicate the first TCI state indication information.

Second, on the basis of the first point, the scheduling time interval (time offset between the reception of the DL DCI and the corresponding PDSCH) of the first DCI is greater than, or greater than or equal to the first threshold, that is, the terminal device does not want the scheduling time interval of the first DCI to be smaller than, or smaller than or equal to the first threshold, so as to limit the network configuration situations, reduce the number of possible situations, and reduce the complexity of the UE and the network implementations.

Third, if the first DCI does not carry the TCI state indication field, or the scheduling time interval of the first DCI is smaller than, or smaller than or equal to the first threshold, when the terminal device receives the first PDSCH, the terminal device determines the TCI state corresponding to the receipt of the first PDSCH according to a TCI state with the lowest identity among active TCI states corresponding to the PDSCH on the second active BWP, or determine the QCL assumption when receiving the first PDSCH, thereby not distinguishing different TRPs for the second CC, and simplifying the implementations of the network and the terminal.

Fourth, if the first DCI does not carry the TCI state indication field or the scheduling time interval of the first DCI is smaller than, or smaller than or equal to the first threshold, when the terminal device receives the first PDSCH, the terminal device determines the TCI state corresponding to receipt of the first PDSCH according to the first TCI state on the second active BWP, or determines the QCL assumption when the first PDSCH is received.

According to some embodiments, the first TCI state is configured by RRC signaling or MAC CE signaling, and thus the network can flexibly control which signaling is to be used, thereby improving system flexibility.

Fifth, if the first DCI does not carry the TCI state indication field, or the scheduling time interval of the first DCI is smaller than, or smaller than or equal to the first threshold, when the terminal device receives the first PDSCH, the terminal device determines the TCI state corresponding to receipt of the first PDSCH according to the TCI state with the lowest identity among the active TCI states corresponding to the first pool index on the second active BWP, or determines the QCL assumption when the first PDSCH is received, thereby distinguishing different TRPs for the second CC, increasing flexibility and improving system performance.

According to some embodiments, the first pool index is a pool index corresponding to the first CORESET carrying the first DCI.

According to some embodiments, the pool index on the second active BWP may be configured through RRC, or associated with the active TCI state corresponding to the MAC CE signaling

Sixth, if the first DCI does not carry the TCI state indication field, or the scheduling time interval of the first DCI is smaller than, or smaller than or equal to the first threshold, there will be the following two cases:
Case 1: if the network device configures the terminal device to use joint HARQ-ACK feedback:
According to some embodiments, when receiving the first PDSCH, the terminal device determines the TCI state corresponding to receipt of the first PDSCH according to the TCI state with the lowest identity among the active TCI states corresponding to the PDSCH on the second active BWP, or determines the QCL assumption TCI state when receiving the first PDSCH, so that different TRPs are not differentiated for the second CC, which simplifies the implementations of the network and the terminal.

According to some embodiments, the first DCI and the second DCI cannot overlap in time, thereby limiting network scheduling and simplifying the implementations of the network and the terminal.

Case 2: if the network device configures the terminal device to use a separate HARQ-ACK feedback):
According to some embodiments, when the terminal device receives the first PDSCH, the terminal device determines the TCI state corresponding to receipt of the first PDSCH according to the TCI state with the lowest identity among the active TCI states corresponding to the first pool index on the second active BWP, or determines the QCL assumptions when the first PDSCH is received.

According to some embodiments, the first pool index is a pool index corresponding to the first CORESET carrying the first DCI.

According to some embodiments, the pool index on the second active BWP may be configured through RRC or associated with the corresponding active TCI state through MAC CE signaling.

According to some embodiments, only the first DCI may be transmitted, that is, there is no second DCI transmission, which is degraded to use in a single TRP scenario, thereby simplifying network and terminal implementation complexity.

According to some embodiments, when receiving the first PDSCH, the terminal device determines the TCI state with the lowest identity among the active TCI states corresponding to the PDSCH on the second active BWP as the TCI state corresponding to receipt of the first PDSCH, or determines the QCL assumption when the first PDSCH is received, so that different TRPs are not differentiated for the second CC, which simplifies the implementations of the network and the terminal.

In this example, the first threshold is configured by the network, or is specified in a protocol, or is reported in a UE capability.

In a case where the first threshold is reported through UE capability:
Optionally, the first threshold is reported through the parameter timeDurationForQCL, so as to support terminals with different capabilities.

Optionally, the relevant capabilities are independently reported for different frequency bands or frequency band combinations.

In this example, the terminal device feeds back HARQ related information through the HARQ-ACK codebook corresponding to the first PDSCH according to the detection situation of the first PDSCH.

### Example 2. Single PDCCH Scenario

The terminal device receives the first DCI on the first active BWP of the first carrier CC. The first DCI is transmitted on the resource indicated by the first CORESET. The first PDSCH scheduled by the first DCI is received on the second active BWP of the second carrier CC.

First, the second CC operates in a frequency band higher than 6 GHz, or at least the second CC operates in a millimeter wave frequency band.

Second, the network device configures multiple TCI state groups corresponding to the TCI state indication field codepoints in the DCI for the second active BWP, so that one codepoint may correspond to multiple TCI states, thereby supporting multiple TRP scenario and improving system performance. The DCI here does not necessarily refer to the first DCI, and may also refer to other DCIs on the first active BWP.

Here, each TCI state group includes one or more TCI states, and at least one TCI state group includes two or more TCI states. One codepoint corresponds to one TCI state group. The correspondence between codepoints and TCI states is configured through MAC CE signaling.

In this example, depending on whether the first CC and the second CC are the same CC, the manner of determining the TCI state corresponding to the reception of the first PDSCH is different.

When the first CC and the second CC are the same CC (or the length of the carrier indicator field in the first DCI is 0 bit), the first DCI does not carry the TCI state indication field, or the scheduling time interval of the first DCI is smaller than, or smaller than or equal to the first DCI threshold, when receiving the first PDSCH, the terminal device determines the TCI state corresponding to receipt of the first PDSCH according to the TCI state corresponding to the second CORESET, or determines the QCL assumption when g the first PDSCH is received.

According to some embodiments, the second CORESET is a CORESET with the lowest ID among CORESETs in a latest downlink time slot on the first active BWP detected by the terminal device.

When the first CC and the second CC are the same CC or the length of the carrier indicator field in the first DCI is 0 bit, if the first DCI does not carry the TCI state indication field or the scheduling time interval of the first DCI is smaller than, or smaller than or equal to the first threshold, when receiving the first PDSCH, the terminal device determines the TCI state corresponding to receipt of the first PDSCH according to the first TCI state, or determines the QCL assumption when the first PDSCH is received.

According to some embodiments, the first TCI state is one or more TCI states corresponding to the minimum or maximum codepoint value in a corresponding field (a field that supports TCI) in the DCI of the terminal on the first active BWP.

When the first CC and the second CC are two different CCs (or when the carrier indicator field in the first DCI is 3 bits):
First, the first CORESET for transmitting the first DCI is configured with signaling to indicate that the corresponding first DCI contains the TCI state indication field. That is, the terminal device does not want the first DCI not to carry the TCI state indication field, thereby restricting the network configure situation, reducing the number of possible situations, and reducing the complexity of UE and network implementations.

According to some embodiments, the parameter tci-PresentInDCI in the first CORESET for indicating whether the DCI contains a field for indicating PDSCH beam information is set to: enabled, so as to indicate that the DCI includes a TCI state indication field indicating the PDSCH beam information.

According to some embodiments, the first DCI belongs to DCI format 1_1. Under such condition, the terminal device does not expect that the first DCI format 1_1 does not carry the TCI state indication field, or the DCI format 1_0 is not suitable for such a scenario.

According to some embodiments, the TCI indication field (Transmission Configuration Indication) in the first DCI is used to indicate the first TCI state indication information.

Second, on the basis of the first point, the scheduling time interval (time offset between the reception of the DL DCI and the corresponding PDSCH) of the first DCI is greater than, or greater than or equal to the first threshold, that is, the terminal device does not want the scheduling time interval of the first DCI to be smaller than, or smaller than or equal to the first threshold, so as to limit the network configuration situations, reduce the number of possible situations, and reduce the complexity of the UE and the network implementations.

Third, if the first DCI does not carry the TCI state indication field, or the scheduling time interval of the first DCI is smaller than, or smaller than or equal to the first threshold, when the terminal device receives the first PDSCH, the terminal device determines the TCI state corresponding to the receipt of the first PDSCH according to a TCI state with the lowest identity among active TCI states corresponding to the PDSCH on the second active BWP, or determine the QCL assumption when receiving the first PDSCH, thereby not distinguishing different TRPs for the second CC, and simplifying the implementations of the network and the terminal.

Fourth, if the first DCI does not carry the TCI state indication field or the scheduling time interval of the first DCI is smaller than, or smaller than or equal to the first threshold, when the terminal device receives the first PDSCH, the terminal device determines the TCI state corresponding to receipt of the first PDSCH according to the first TCI state on the second active BWP, or determines the QCL assumption when the first PDSCH is received. Thus, the network may flexibly controls which determination to be made, thereby improving system flexibility

According to some embodiments, the first TCI state is configured by RRC signaling or MAC CE signaling.

Fifth, if the first DCI does not carry the TCI state indication field, or the scheduling time interval of the first DCI is smaller than, or smaller than or equal to the first threshold, when the terminal device receives the first PDSCH, the terminal device determines the TCI state corresponding to receipt of the first PDSCH according to the active first TCI state group on the second active BWP, or determines the QCL assumption when the first PDSCH is received, thereby distinguishing different TRPs for the second CC, increasing flexibility and improving system performance.

According to some embodiments, the first TCI state group is the first or last TCI state group where the TCI state with the lowest identity among active TCI states on the second active BWP is.

According to some embodiments, the first TCI state group is a TCI state group corresponding to the smallest codepoint or the largest codepoint.

In this example, the first threshold is configured by the network, or is specified in a protocol, or is reported in a UE capability.

In a case where the first threshold is reported through UE capability:
Optionally, the first threshold is reported through the parameter timeDurationForQCL, so as to support terminals with different capabilities.

Optionally, the relevant capabilities are independently reported for different frequency bands or frequency band combinations.

In this example, the terminal device feeds back HARQ related information through a corresponding HARQ-ACK codebook according to the detection situation of the first PDSCH scheduled by the first DCI.

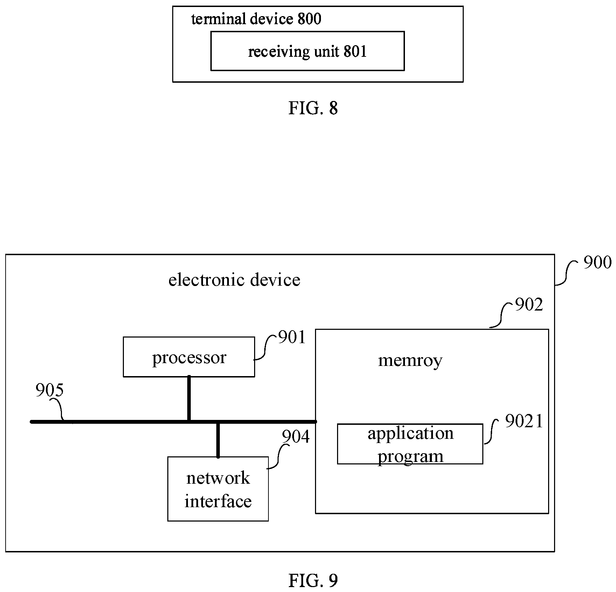

In order to implement the above information processing method, an embodiment of the present disclosure provides a terminal device. FIG. 8 shows the composition of the terminal device. As shown in FIG. 8, the terminal device 800 includes a receiving unit 801.

The receiving unit 801 is configured to receive first Downlink Control Information (DCI) on a first active Bandwidth Part (BWP) of a first component carrier (CC), wherein the first DCI is transmitted on a resource indicated by a first Control Resource Set (CORESET) corresponding to the first active BWP, and a first Physical Downlink Shared Channel (PDSCH) scheduled by the first DCI is carried on a second active BWP of a second CC.

In an embodiment of the present disclosure, the first CORESET belongs to a first CORESET pool.

In an embodiment of the present disclosure, the terminal device further includes:
a first determination unit configured to determine a first target Transmission Configuration Indication (TCI) state, wherein the first target TCI state is used to receive the first PDSCH.

In an embodiment of the present disclosure, when the first CC and the second CC are a same CC or the length of a carrier indicator field of the first DCI is 0 bit, and the first DCI does not carry a TCI state indication field or a scheduling time interval of the first DCI is smaller than, or smaller than or equal to a first threshold, the first target TCI state includes:
a TCI state with a lowest identity among active TCI states corresponding to a first pool index on the second active BWP.

In an embodiment of the present disclosure, the first pool index includes:
a pool index corresponding to the first CORESET.

In an embodiment of the present disclosure, when the first CC and the second CC are a same CC or the length of a carrier indicator field of the first DCI is 0 bit, and the first DCI does not carry a TCI state indication field or a scheduling time interval of the first DCI is smaller than or equal to a first threshold, the first target TCI state includes:
a TCI state corresponding to a second CORESET.

In an embodiment of the present disclosure, the second CORESET includes:
a CORESET with a lowest identity among CORESETs corresponding to a second pool index in a latest downlink time slot on the first active BWP detected by the terminal device.

In an embodiment of the present disclosure, the second pool index includes:
a pool index corresponding to the first CORESET.

In an embodiment of the present disclosure, when the first CC and the second CC are different CCs or the length of a carrier indicator field of the first DCI is a non-zero bit, the first CORESET is configured with an information element indicating that the first DCI contains a TCI state indication field.

In an embodiment of the present disclosure, the first target TCI state includes:
a TCI state indicated by the TCI state indication field carried in the first DCI.

In an embodiment of the present disclosure, a scheduling time interval of the first DCI is equal to, or greater than or equal to a first threshold.

In an embodiment of the present disclosure, when the first CC and the second CC are different CCs or when the length of a carrier indicator field of the first DCI is a non-zero bit, and the first DCI does not carry a TCI state indication field or a scheduling time interval of the first DCI is smaller than or equal to a first threshold, the first target TCI state includes:
a TCI state with a lowest identity among active TCI states corresponding to a downlink data channel on the second active BWP.

In an embodiment of the present disclosure, the terminal device uses a joint Hybrid Automatic Repeat reQuest acknowledgment (HARQ-ACK) feedback.

In an embodiment of the present disclosure, there is no overlap between the first DCI and a second DCI on the first active BWP.

In an embodiment of the present disclosure, the terminal device uses a separate HARQ-ACK feedback.

In an embodiment of the present disclosure, when the first CC and the second CC are different CCs or when the length of a carrier indicator field of the first DCI is a non-zero bit, and the first DCI does not carry a TCI state indication field or a scheduling time interval of the first DCI is smaller than or equal to a first threshold, the first target TCI state includes:
a first TCI state on the second active BWP.

In an embodiment of the present disclosure, the first TCI state is configured by Radio Resource Control (RRC) signaling or Medium Access Control Control Element (MAC CE) signaling.

In an embodiment of the present disclosure, when the first CC and the second CC are different CCs or when the length of a carrier indicator field of the first DCI is a non-zero bit, and the first DCI does not carry a TCI state indication field or a scheduling time interval of the first DCI is smaller than or equal to a first threshold, the first target TCI state includes:
a TCI state with a lowest identity among active TCI states corresponding to a first pool index on the second active BWP.

In an embodiment of the present disclosure, the first pool index is a pool index corresponding to the first CORESET.

In an embodiment of the present disclosure, the terminal device uses a separate HARQ-ACK feedback.

In an embodiment of the present disclosure, the first threshold is determined by one of the following:
network device configuration, pre-provisioning and UE capability reporting.

In an embodiment of the present disclosure, when a CORESET corresponding to the first active BWP is not configured with a pool index, all CORESETs corresponding to the first active BWP belong to the first CORESET pool.

In an embodiment of the present disclosure, at least one CORESET among CORESETs corresponding to the first active BWP is configured with a corresponding pool index.

In an embodiment of the present disclosure, a pool index corresponding to a CORESET for which the pool index is configured is configured in a RRC configuration parameter; or
a pool index corresponding to a CORESET for which the pool index is not configured is a preset pool index.

In an embodiment of the present disclosure, the first CORESET pool includes at least one CORESET.

In an embodiment of the present disclosure, CORESETs in the first CORESET pool correspond to a same pool index.

In an embodiment of the present disclosure, the first active BWP corresponds to at least two CORESET pools including the first CORESET pool.

In an embodiment of the present disclosure, pool indexes corresponding to different CORESET pools are different.

In an embodiment of the present disclosure, a value of a pool index includes: 0 or 1.

In an embodiment of the present disclosure, among CORESETs corresponding to the first active BWP, CORESETs with no pool index configured belong to one CORESET pool.

In an embodiment of the present disclosure, a pool index corresponding to the first CORESET pool is an identity of the first CORESET pool.

In an embodiment of the present disclosure, the terminal device reports whether the terminal device is capable of supporting at least two CORESET pools through user equipment (UE) capability reporting.

In an embodiment of the present disclosure, the second active BWP is configured with one or more TCI state groups corresponding to a codepoint of a TCI state indication field of a DCI in the first active BWP.

In an embodiment of the present disclosure, the terminal device further includes:
a second determination unit configured to determine a second target TCI state, wherein the second target TCI state is used to receive the first PDSCH.

In an embodiment of the present disclosure, when the first CC and the second CC are a same CC or the length of a carrier indicator field of the first DCI is 0 bit, and the first DCI does not carry a TCI state indication field or a scheduling time interval of the first DCI is smaller than or equal to a second threshold, the second target TCI state includes:
a TCI state corresponding to the second CORESET.

In an embodiment of the present disclosure, the second CORESET includes:
a CORESET with a lowest identity among CORESETs in a latest downlink time slot on the first active BWP detected by the terminal device.

In an embodiment of the present disclosure, when the first CC and the second CC are a same CC or the length of a carrier indicator field of the first DCI is 0 bit, and the first DCI does not carry a TCI state indication field or a scheduling time interval of the first DCI is smaller than or equal to a second threshold, the second target TCI state includes:
one or more TCI states corresponding to a smallest codepoint or a largest codepoint in a field for supporting TCI in a DCI on the first active BWP.

In an embodiment of the present disclosure, when the first CC and the second CC are different CCs or the length of a carrier indicator field of the first DCI is a non-zero bit, the first CORESET is configured with an information element indicating that the first DCI contains a TCI state indication field.

In an embodiment of the present disclosure, the second target TCI state includes:
a TCI state indicated by the TCI state indication field carried in the first DCI.

In an embodiment of the present disclosure, a scheduling time interval of the first DCI is equal to, or greater than or equal to a second threshold.

In an embodiment of the present disclosure, when the first CC and the second CC bits are different CCs or the length of a carrier indicator field of the first DCI is a non-zero bit, and the first DCI does not carry a TCI state indication field or a scheduling time interval of the first DCI is smaller than, or smaller than or equal to a second threshold, the second target TCI state includes:
a TCI state with a lowest identity among active TCI states corresponding to a downlink data channel in the second active BWP.

In an embodiment of the present disclosure, when first CC and the second CC are different CCs or the length of a carrier indicator field of the first DCI is a non-zero bit, and the first DCI does not carry a TCI state indication field or a scheduling time interval of the first DCI is smaller than or equal to a second threshold, the second target TCI state includes:
a first TCI state on the second active BWP.

In an embodiment of the present disclosure, the first TCI state is configured through RRC signaling or MAC CE signaling.

In an embodiment of the present disclosure, when the first CC and the second CC bits are different CCs or when the length of a carrier indicator field of the first DCI is a non-zero bit, and the first DCI does not carry a TCI state indication field or a scheduling time interval of the first DCI is smaller than or equal to a second threshold, the second target TCI state includes:
one or more TCI states in a first TCI state group activated on the second active BWP.

In an embodiment of the present disclosure, the first TCI state group includes:
the first or last TCI state group where a TCI state with a lowest identity among TCI states activated on the second active BWP is.

In an embodiment of the present disclosure, the first TCI state group includes:
a TCI state group corresponding to a smallest codepoint or a largest codepoint.

In an embodiment of the present disclosure, the second threshold is determined by one of the following:
network device configuration, pre-provisioning and UE capability reporting.

In an embodiment of the present disclosure, at least one of the one or more TCI state groups includes at least two TCI states.

In an embodiment of the present disclosure, the codepoint corresponds to the one or more TCI state groups.

In an embodiment of the present disclosure, the one or more TCI state groups are configured by MAC CE.

In an embodiment of the present disclosure, the terminal device feeds back HARQ information through a response codebook corresponding to the first PDSCH according to a detection situation of the first PDSCH.

An embodiment of the present disclosure further provides a terminal device, including a processor and a memory configured to store a computer program runnable on the processor. When the computer program runs on the processor, the processor is caused to perform steps in the information processing method according to any one of the above embodiments.

FIG. 9 is a schematic diagram showing hardware composition of an electronic device (a terminal device) according to an embodiment of the present disclosure. The electronic device 900 includes at least one processor 901, a memory 902 and at least one network interface 904. The components in the electronic device 900 are coupled together through a bus system 905. It can be understood that the bus system 905 is used to implement connection and communication between these components. In addition to the data bus, the bus system 905 also includes a power bus, a control bus, and a status signal bus. For clarity of description, various buses are marked as the bus system 905 in FIG. 9.

It can be understood that the memory 902 may be a volatile memory or a non-volatile memory, and may also include both volatile and non-volatile memory. The non-volatile memory can be ROM, Programmable Read-Only Memory (PROM), Erasable Programmable Read-Only Memory (EPROM), Electrically Erasable Programmable Read-Only Memory (EEPROM), Ferromagnetic Random Access Memory (FRAM), Flash Memory, magnetic surface storage, optical disk, or Compact Disc Read-Only Memory (CD-ROM). The magnetic surface storage can be disk storage or tape storage. The volatile memory may be Random Access Memory (RAM), which is used as an external cache. By way of exemplary but not restrictive description, many forms of RAM can be used, such as Static Random Access Memory (SRAM), Synchronous Static Random Access Memory (SSRAM), Dynamic Random Access Memory (DRAM,), Synchronous Dynamic Random Access Memory (SDRAM), Double Data Rate Synchronous Dynamic Random Access Memory (DDRSDRAM), Enhanced ESDRAM (Enhanced Synchronous Dynamic Random Access Memory), Synchronous Link Dynamic Random Access Memory (SLDRAM), or Direct Rambus Random Access Memory (DRRAM). The memory 902 described in embodiments of the present disclosure is intended to include, but is not limited to, these and any other suitable types of memory.

The memory 902 in embodiments of the present disclosure is used to store various types of data to support operation of the electronic device 900. Examples of these data include: any computer program running on the electronic device 900, such as application program 9021. The program for implementing the methods of embodiments of the present disclosure may be included in the application program 9021.

The methods disclosed in the foregoing embodiments of the present disclosure may be applied to the processor 901 or implemented by the processor 901. The processor 901 may be an integrated circuit chip with signal processing capability. In implementations, the steps of the foregoing methods can be completed by a hardware integrated logic circuit or instructions in software form in the processor 901 The aforementioned processor 901 may be a general-purpose processor, a Digital Signal Processor (DSP), or other programmable logic device, discrete gate or transistor logic device, discrete hardware component, and the like. The processor 901 may implement or execute various methods, steps, and logical block diagrams disclosed in embodiments of the present disclosure. The general-purpose processor may be a microprocessor or any conventional processor. The steps of the methods disclosed in embodiments of the present disclosure can be directly embodied as being performed by a hardware decoding processor, or being performed by a combination of hardware and software modules in the decoding processor. The software modules may be located in a storage medium, and the storage medium is located in the memory 902. The processor 901 reads the information in the memory 902 and completes the steps of the foregoing methods in combination with its hardware.

In an exemplary embodiment, the electronic device 900 may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, MPUs, or other electronic components to perform the aforementioned methods.

An embodiment of the present disclosure further provides a storage medium for storing a computer program, which is not covered by the claims.

According to some embodiments, the storage medium may be applied to the terminal device in embodiments of the present disclosure, and the computer program enables a computer to perform corresponding processes in each method embodiment of the present disclosure, and repeated descriptions will be omitted here for brevity.

The present disclosure is described with reference to flowcharts and/or block diagrams of methods, devices (systems), and computer program products according to embodiments of the present disclosure. It should be understood that each process and/or block in the flowchart and/or block diagram, and the combination of processes and/or blocks in the flowchart and/or block diagram can be implemented by computer program instructions. These computer program instructions can be provided to the processor of a general-purpose computer, a special-purpose computer, an embedded processor, or other programmable data processing device to generate a machine, so that the instructions executed by the processor of the computer or other programmable data processing device to generate a device that implements the functions specified in one process or multiple processes in the flowcharts and/or one block or multiple blocks in the block diagrams.

These computer program instructions can also be stored in a computer-readable memory that can direct a computer or other programmable data processing device to work in a specific manner, so that the instructions stored in the computer-readable memory produce an article of manufacture including the instruction device. The instruction device implements the functions specified in one process or multiple processes in the flowcharts and/or one block or multiple blocks in the block diagrams.

These computer program instructions can also be loaded on a computer or other programmable data processing device, so that a series of operation steps are executed on the computer or other programmable device to produce computer-implemented processes. In this way, instructions executed by the computer or other programmable device provide steps for implementing the functions specified in one process or multiple processes in the flowcharts and/or one block or multiple blocks in the block diagrams.

The invention is defined by the appended claims.

## Claims

1. An information processing method, the method performed by a terminal device, the method comprising:
receiving, by the terminal device, first Downlink Control Information, DCI, on a first active Bandwidth Part, BWP, of a first component carrier, CC, wherein the first DCI is transmitted on a resource indicated by a first Control Resource Set, CORESET, corresponding to the first active BWP, and a first Physical Downlink Shared Channel, PDSCH, scheduled by the first DCI is carried on a second active BWP of a second CC,
wherein the first CORESET belongs to a first CORESET pool, and at least one CORESET among CORESETs corresponding to the first active BWP is configured with a corresponding pool index,
wherein the method further comprises: determining, by the terminal device, a first target Transmission Configuration Indication, TCI, state, wherein the first target TCI state is used to receive the first PDSCH,
**characterized in that** when the first CC and the second CC are different CCs, and the first DCI does not carry a TCI state indication field or a scheduling time interval of the first DCI is smaller than a first threshold, the first target TCI state comprises:
a TCI state with a lowest identity among active TCI states corresponding to a downlink data channel on the second active BWP.

2. The method according to claim 1, wherein the first CORESET pool comprises at least one CORESET.

3. The method according to claim 2, wherein CORESETs in the first CORESET pool correspond to a same pool index.

4. The method according to claim 1, wherein the second active BWP is configured with one or more TCI state groups corresponding to a codepoint of a TCI state indication field of a DCI in the first active BWP.

5. The method according to claim 4, further comprising:
determining, by the terminal device, a second target TCI state, wherein the second target TCI state is used to receive the first PDSCH.

6. The method according to claim 5, wherein when the first CC and the second CC are a same CC or the length of a carrier indicator field of the first DCI is 0 bit, and the first DCI does not carry the TCI state indication field or the scheduling time interval of the first DCI is smaller than or equal to a second threshold, the second target TCI state comprises:
a TCI state corresponding to the second CORESET.

7. The method according to claim 6, wherein the second CORESET comprises:
a CORESET with a lowest identity among CORESETs in a latest downlink time slot on the first active BWP detected by the terminal device.

8. The method according to claim 6 or 7, wherein the second threshold is determined by one of the following:
network device configuration, pre-provisioning and UE capability reporting.

9. The method according to any one of claims 4 to 8, wherein at least one of the one or more TCI state groups comprises at least two TCI states.

10. The method according to any of claims 4 to 9, wherein the codepoint corresponds to the one or more TCI state groups.

11. The method according to any one of claims 4 to 10, wherein a correspondence between the one or more TCI state groups and the codepoint is configured by MAC CE.

12. A terminal device, comprising:
a receiving unit configured to receive first Downlink Control Information, DCI, on a first active Bandwidth Part, BWP, of a first component carrier, CC, wherein the first DCI is transmitted on a resource indicated by a first Control Resource Set, CORESET, corresponding to the first active BWP, and a first Physical Downlink Shared Channel, PDSCH, scheduled by the first DCI is carried on a second active BWP of a second CC,
wherein the first CORESET belongs to a first CORESET pool, and at least one CORESET among CORESETs corresponding to the first active BWP is configured with a corresponding pool index,
a first determination unit, configured to determine a first target Transmission Configuration Indication, TCI, state, wherein the first target TCI state is used to receive the first PDSCH,
**characterized in that** when the first CC and the second CC are different CCs, and the first DCI does not carry a TCI state indication field or a scheduling time interval of the first DCI is smaller than a first threshold, the first target TCI state comprises:
a TCI state with a lowest identity among active TCI states corresponding to a downlink data channel on the second active BWP.

13. The terminal device according to claim 12, wherein the first CORESET pool comprises at least one CORESET.

14. The terminal device according to claim 13, wherein CORESETs in the first CORESET pool correspond to a same pool index.

15. The terminal device according to claim 12, wherein the second active BWP is configured with one or more TCI state groups corresponding to a codepoint of a TCI state indication field of a DCI in the first active BWP.

## Patentansprüche

1. Informationsverarbeitungsverfahren, wobei das Verfahren durch eine Endgerätevorrichtung durchgeführt wird, wobei das Verfahren umfasst:
Empfangen, durch die Endgerätevorrichtung, von ersten Abwärtsstreckensteuerinformationen, DCI, auf einem ersten aktiven Bandbreitenteil, BWP, eines ersten Komponententrägers, CC, wobei die ersten DCI auf einer Ressource übertragen werden, die durch einen ersten Steuerressourcensatz, CORESET, angezeigt wird, der dem ersten aktiven BWP entspricht, und ein erster physikalischer Abwärtsstrecken-Gemeinschaftskanal, PDSCH, der durch die ersten DCI geplant wird, auf einem zweiten aktiven BWP eines zweiten CC übertragen wird,
wobei der erste CORESET zu einer ersten CORESET-Gruppe gehört und mindestens ein CORESET unter den CORESETs, die dem ersten aktiven BWP entsprechen, mit einem entsprechenden Gruppenindex eingerichtet ist,
wobei das Verfahren ferner umfasst: Bestimmen, durch die Endgerätevorrichtung, eines ersten Ziel-Übertragungskonfigurationsanzeige-, TCI-, Zustands, wobei der erste Ziel-TCI-Zustand zum Empfangen des ersten PDSCH verwendet wird,
**dadurch gekennzeichnet, dass**, wenn der erste CC und der zweite CC unterschiedliche CCs sind und die ersten DCI kein TCI-Zustandsanzeigefeld tragen oder ein Planungszeitintervall der ersten DCI kleiner als ein erster Schwellenwert ist, der erste Ziel-TCI-Zustand umfasst:
einen TCI-Zustand mit der niedrigsten Identität unter aktiven TCI-Zuständen, die einem Abwärtsstreckendatenkanal auf dem zweiten aktiven BWP entsprechen.

2. Verfahren nach Anspruch 1, wobei die erste CORESET-Gruppe mindestens einen CORESET umfasst.

3. Verfahren nach Anspruch 2, wobei die CORESETs in der ersten CORESET-Gruppe einem gemeinsamen Gruppenindex entsprechen.

4. Verfahren nach Anspruch 1, wobei der zweite aktive BWP mit einer oder mehreren TCI-Zustandsgruppen eingerichtet ist, die einem Codepunkt eines TCI-Zustandsanzeigefelds von DCI in dem ersten aktiven BWP entsprechen.

5. Verfahren nach Anspruch 4, ferner umfassend:
Bestimmen, durch die Endgerätevorrichtung, eines zweiten Ziel-TCI-Zustands, wobei der zweite Ziel-TCI-Zustand zum Empfangen des ersten PDSCH verwendet wird.

6. Verfahren nach Anspruch 5, wobei, wenn der erste CC und der zweite CC derselbe CC sind oder die Länge eines Trägeranzeigefelds der ersten DCI 0 Bit beträgt und die ersten DCI kein TCI-Zustandsanzeigefeld tragen oder das Planungszeitintervall der ersten DCI kleiner oder gleich einem zweiten Schwellenwert ist, der zweite Ziel-TCI-Zustand umfasst:
einen TCI-Zustand, der dem zweiten CORESET entspricht.

7. Verfahren nach Anspruch 6, wobei der zweite CORESET umfasst:
einen CORESET mit der niedrigsten Identität unter CORESETs in einem letzten Abwärtsstreckenzeitschlitz auf dem ersten aktiven BWP, der durch die Endgerätevorrichtung erfasst wird.

8. Verfahren nach Anspruch 6 oder 7, wobei der zweite Schwellenwert durch eines der folgenden bestimmt wird:
Netzwerkvorrichtungskonfiguration, Vorbereitstellung und UE-Fähigkeitsberichterstattung.

9. Verfahren nach einem der Ansprüche 4 bis 8, wobei mindestens eine der einen oder der mehreren TCI-Zustandsgruppen mindestens zwei TCI-Zustände umfasst.

10. Verfahren nach einem der Ansprüche 4 bis 9, wobei der Codepunkt der einen oder den mehreren TCI-Zustandsgruppen entspricht.

11. Verfahren nach einem der Ansprüche 4 bis 10, wobei eine Entsprechung zwischen der einen oder den mehreren TCI-Zustandsgruppen und dem Codepunkt durch MAC CE eingerichtet wird.

12. Endgerätevorrichtung, umfassend:
eine Empfangseinheit, die dazu eingerichtet ist, erste Abwärtsstreckensteuerinformationen, DCI, auf einem ersten aktiven Bandbreitenteil, BWP, eines ersten Komponententrägers, CC, zu empfangen, wobei die ersten DCI auf einer Ressource übertragen werden, die durch einen ersten Steuerressourcensatz, CORESET, angezeigt wird, der dem ersten aktiven BWP entspricht, und ein erster physikalischer Abwärtsstrecken-Gemeinschaftskanal, PDSCH, der durch die erste DCI geplant wird, auf einem zweiten aktiven BWP eines zweiten CC übertragen wird,
wobei der erste CORESET zu einer ersten CORESET-Gruppe gehört und mindestens ein CORESET unter den CORESETs, die dem ersten aktiven BWP entsprechen, mit einem entsprechenden Gruppenindex eingerichtet ist,
eine erste Bestimmungseinheit, die dazu eingerichtet ist, einen ersten Ziel-Übertragungskonfigurationsanzeige-, TCI-, Zustand zu bestimmen, wobei der erste Ziel-TCI-Zustand zum Empfangen des ersten PDSCH verwendet wird,
**dadurch gekennzeichnet, dass**, wenn der erste CC und der zweite CC unterschiedliche CCs sind und die ersten DCI kein TCI-Zustandsanzeigefeld tragen oder ein Planungszeitintervall der ersten DCI kleiner als ein erster Schwellenwert ist, der erste Ziel-TCI-Zustand umfasst:
einen TCI-Zustand mit der niedrigsten Identität unter aktiven TCI-Zuständen, die einem Abwärtsstreckendatenkanal auf dem zweiten aktiven BWP entsprechen.

13. Endgerätevorrichtung nach Anspruch 12, wobei die erste CORESET-Gruppe mindestens einen CORESET umfasst.

14. Endgerätevorrichtung nach Anspruch 13, wobei die CORESETs in der ersten CORESET-Gruppe einem gemeinsamen Gruppenindex entsprechen.

15. Endgerätegruppe nach Anspruch 12, wobei der zweite aktive BWP mit einer oder mehreren TCI-Zustandsgruppen eingerichtet ist, die einem Codepunkt eines TCI-Zustandsanzeigefelds einer DCI in dem ersten aktiven BWP entsprechen.

## Revendications

1. Procédé de traitement d'informations, le procédé étant exécuté par un dispositif terminal, le procédé comprenant :
la réception, par le dispositif terminal, de premières informations de commande de liaison descendante, DCI, sur une première partie de largeur de bande, BWP, active, d'une première composante porteuse, CC, dans lequel les premières DCI sont transmises sur une ressource indiquée par un premier ensemble de ressources de commande, CORESET, correspondant à la première BWP active, et un premier canal physique partagé de liaison descendante, PDSCH, programmé par les premières DCI est transporté sur une seconde BWP active d'une seconde CC,
dans lequel le premier CORESET appartient à un premier groupe de CORESET, et au moins un CORESET parmi les CORESET correspondant à la première BWP active est configuré avec un indice de groupe correspondant,
le procédé comprenant en outre : la détermination, par le dispositif terminal, d'un premier état d'indication de configuration de transmission, TCI, cible, dans lequel le premier état de TCI cible est utilisé pour recevoir le premier PDSCH,
**caractérisé en ce que** lorsque la première CC et la seconde CC sont des CC différentes, et que les premières DCI ne transportent pas un champ d'indication d'état de TCI ou qu'un intervalle temporel de programmation des premières DCI est inférieur à un premier seuil, le premier état de TCI cible comprend :
un état de TCI ayant une identité la plus faible parmi des états de TCI actifs correspondant à un canal de données de liaison descendante sur la seconde BWP active.

2. Procédé selon la revendication 1, dans lequel le premier groupe de CORESET comprend au moins un CORESET.

3. Procédé selon la revendication 2, dans lequel des CORESET dans le premier groupe de CORESET correspondent à un même indice de groupe.

4. Procédé selon la revendication 1, dans lequel la seconde BWP active est configurée avec un ou plusieurs groupes d'état de TCI correspondant à un point de code d'un champ d'indication d'état de TCI de DCI dans la première BWP active.

5. Procédé selon la revendication 4, comprenant en outre :
la détermination, par le dispositif terminal, d'un second état de TCI cible, dans lequel le second état de TCI cible est utilisé pour recevoir le premier PDSCH.

6. Procédé selon la revendication 5, dans lequel lorsque la première CC et la seconde CC sont une même CC ou que la longueur d'un champ d'indication de porteuse des premières DCI est de 0 bit, et que les premières DCI ne transportent pas le champ d'indication d'état de DCI ou que l'intervalle temporel de programmation des premières DCI est inférieur ou égal à un second seuil, le second état de TCI cible comprend :
un état de TCI correspondant au second CORESET.

7. Procédé selon la revendication 6, dans lequel le second CORESET comprend :
un CORESET ayant une identité la plus faible parmi des CORESET dans un dernier créneau temporel de liaison descendante sur la première BWP active détecté par le dispositif terminal.

8. Procédé selon la revendication 6 ou 7, dans lequel le second seuil est déterminé par l'un des éléments suivants :
une configuration de dispositif de réseau, un préprovisionnement et un rapport de capacité d'UE.

9. Procédé selon l'une quelconque des revendications 4 à 8, dans lequel au moins l'un du ou des groupes d'état de TCI comprend au moins deux états de TCI.

10. Procédé selon l'une quelconque des revendications 4 à 9, dans lequel le point de code correspond au ou aux groupes d'état de TCI.

11. Procédé selon l'une quelconque des revendications 4 à 10, dans lequel une correspondance entre le ou les groupes d'état de TCI et le point de code est configurée par un CE MAC.

12. Dispositif terminal, comprenant :
une unité de réception, configurée pour recevoir des premières informations de commande de liaison descendante, DCI, sur une première partie de largeur de bande, BWP, active, d'une première composante porteuse, CC, dans lequel les premières DCI sont transmises sur une ressource indiquée par un premier ensemble de ressources de commande, CORESET, correspondant à la première BWP active, et un premier canal physique partagé de liaison descendante, PDSCH, programmé par les premières DCI est transporté sur une seconde BWP active d'une seconde CC,
dans lequel le premier CORESET appartient à un premier groupe de CORESET, et au moins un CORESET parmi les CORESET correspondant à la première BWP active est configuré avec un indice de groupe correspondant,
une première unité de détermination, configurée pour déterminer un premier état d'indication de configuration de transmission, TCI, cible, dans lequel le premier état de TCI cible est utilisé pour recevoir le premier PDSCH, **caractérisé en ce que** lorsque la première CC et la seconde CC sont des CC différentes, et que les premières DCI ne transportent pas un champ d'indication d'état de TCI ou qu'un intervalle temporel de programmation des premières DCI est inférieur à un premier seuil, le premier état de TCI cible comprend :
un état de TCI ayant une identité la plus faible parmi des états de TCI actifs correspondant à un canal de données de liaison descendante sur la seconde BWP active.

13. Dispositif terminal selon la revendication 12, dans lequel le premier groupe de CORESET comprend au moins un CORESET.

14. Dispositif terminal selon la revendication 13, dans lequel des CORESET dans le premier groupe de CORESET correspondent à un même indice de groupe.

15. Dispositif terminal selon la revendication 12, dans lequel la seconde BWP active est configurée avec un ou plusieurs groupes d'état de TCI correspondant à un point de code d'un champ d'indication d'état de TCI de DCI dans la première BWP active.
